# EUROPÄISCHE PATENTANMELDUNG

(11) **EP 4 810 833 A1**
(43) Veröffentlichungstag der Anmeldung: **23.09.2026**
(21) Anmeldenummer: 25164994.3
(22) Anmeldetag: 20.03.2025
(51) Int. Cl.: F16K 5/04, F16K 5/12, F16K 11/085

(54) **ARMATUR**

(71) Anmelder: Watts Industries Deutschland GmbH, 76829 Landau (DE)
(72) Erfinder: HANS, Heribert, 67480 Edenkoben (DE); CATTARIUS, Marco, 76857 Albersweiler (DE)
(74) Vertreter: Patentanwälte Dr. Keller, Schwertfeger Partnerschaft mbB

(57) **Zusammenfassung**

Die vorliegende Erfindung betrifft eine Armatur, umfassend ein Gehäuse (12) mit einer Kammer (14) im Inneren des Gehäuses (12), wobei die Kammer (14) eine Kammerwand aufweist, in der wenigstens zwei Öffnungen (15) vorgesehen sind, ein Absperrelement (30; 130; 230; 330), das im Inneren der Kammer (14) drehbar gelagert ist und ausgelegt ist, wenigstens eine Öffnung (15) der wenigstens zwei Öffnungen zumindest abschnittsweise zu verschließen, wobei das Absperrelement (30; 130; 230; 330) einen Absperrkörper (32; 132; 332) und ein Absperrsegment (34; 134; 234; 334) mit einer Außenseite aufweist, die zur Kammerwand weist, wobei das Absperrsegment (34; 134; 234; 334) einen Absperrbereich (35; 135) und wenigstens ein Ansatzstück (50a, 50b; 150a, 150b; 250a, 250b) aufweist, wobei das Ansatzstück (50a, 50b; 150a, 150b; 250a, 250b) sich seitlich über den Absperrbereich (35; 135) hinaus erstreckt und wobei in dem Ansatzstück (50a, 50b; 150a, 150b; 250a, 250b) eine Aussparung (52; 152; 252) vorgesehen ist.

## Beschreibung

Die vorliegende Erfindung betrifft eine Armatur nach dem Oberbegriff des Anspruchs 1.

Armaturen werden allgemein zur Regelung und Steuerung des Flusses von Fluiden, insbesondere Wasser verwendet. Die Einsatzbereiche von Armaturen sind sehr vielfältig. Eine besondere Form der Armaturen sind Verteiler- und/oder Mischarmaturen, insbesondere Mischventile wie etwa Drei-Wege-Mischer oder Vier-Wege-Mischer.

Der Drei-Wege-Mischer dient beispielsweise dazu, zwei Flüssigkeitsströme unterschiedlicher Temperaturen in einer Anlage so zu mischen, dass am Ausgang des Drei-Wege-Mischers die Flüssigkeit eine gewünschte Mischtemperatur aufweist. Anlagen oder Systeme, in denen solche Drei-Wege-Mischer eingesetzt werden, umfassen somit eine erste Zufuhrleitung und eine zweite Zufuhrleitung, die jeweils in die Armatur münden, wobei in der ersten Zufuhrleitung eine Flüssigkeit mit hoher Temperatur und in der zweiten Zufuhrleitung eine Flüssigkeit mit geringer Temperatur geführt wird, sowie eine Ausgangsleitung, die mit dem Drei-Wege-Mischer verbunden ist. Der Drei-Wege- Mischer umfasst eine Mischkammer mit wenigstens drei Öffnungen, nämlich zwei Einlässen und einem Auslass, wobei die zwei Einlässe mit jeweils einer Zufuhrleitungen der Anlage und der Auslass mit der Ausgangsleitung verbunden sind. Im Inneren der Mischkammer befindet sich ein Absperrelement, auch Mischerküken genannt, welches drehbar gelagert ist, um die Zufuhrleitungen in die Mischkammer gezielt zu verschließen oder ganz oder teilweise zu öffnen. Drei-Wege-Mischer werden unter anderem in Warmwasserheizungsanlagen eingesetzt.

Eine Armatur, die als Drei-Wege-Mischer arbeitet, kann im Übrigen auch als Verteiler verwendet werden. In diesem Fall sind die Öffnungen der Mischkammer mit einer Zufuhrleitung und zwei Ausgangsleitungen verbunden, so dass der Verteiler einen Einlass und zwei Auslässe aufweist.

Da Armaturen, wie etwa Drei-Wege-Mischer sehr vielseitig eingesetzt werden können, spielt die Dimensionierung und der Einsatzbereich der Armatur eine wichtige Rolle bei der Auswahl einer geeigneten Armatur. Armaturen werden daher mittels verschiedener Kenngrößen beschrieben.

Bei der Auswahl einer geeigneten Armatur, die eine Ventilfunktion wie etwa ein Drei-Wege Mischer aufweist, spielen der maximal mögliche Durchfluss und der Druckverlust, welcher beim Durchgang eines Fluids, insbesondere Wasser durch die Armatur entsteht, eine wichtige Rolle. Aus diesem Grund wurde der Kv-Wert eingeführt.

Der Kv-Wert wird als Durchflussfaktor oder Durchflusskoeffizient bezeichnet. Er ist ein Maß für den erzielbaren Durchfluss einer Flüssigkeit oder eines Gases durch ein Ventil. Der Kv-Wert wird auch als effektiver Querschnitt interpretiert. Der Kv-Wert wird im Zusammenhang mit dem entsprechenden Öffnungsgrad eines Ventils angegeben. Armaturen, die als Ventil arbeiten, werden daher mit dem Kv-Wert beschrieben. Der Kv-Wert einer als Ventil arbeitenden Armatur bei 100% Öffnungsgrad und 1 bar Druckdifferenz wird als Kvs-Wert bezeichnet. Der Kvs-Wert gibt somit den maximalen möglichen Durchsatz einer als Ventil arbeitenden Armatur bei 1 bar Druckdifferenz an.

In Hinblick auf die unterschiedlichen Anforderungen an eine Armatur werden daher Armaturen unterschiedlicher Größe, die sich in ihrem Kvs-Wert unterscheiden, angeboten. Dies hat zur Folge, dass eine Vielzahl von Armaturen unterschiedlicher Größe auf dem Markt vorhanden sind. Dies führt wiederum dazu, dass eine Vielzahl unterschiedlicher Armaturen hergestellt und auf Lager gehalten werden müssen. Die Lagerhaltung gestaltet sich dadurch vergleichsweise aufwändig, da die Nachfrage nach Armaturen unterschiedlicher Größe stark schwanken kann.

Es ist Aufgabe der vorliegenden Erfindung, eine Armatur bereitzustellen, mit Hilfe derer ein Satz von Armaturen mit unterschiedlichen Kvs-Werten kostengünstig herstellbar ist und mit Hilfe derer ein Satz von Armaturen mit unterschiedlichen Kvs-Werten mit einem geringeren Aufwand, insbesondere mit einem geringen Platzaufwand als bisher bekannte Armaturensets gelagert werden kann.

Erfindungsgemäß wird die Aufgabe durch eine Armatur gelöst umfassend ein Gehäuse mit einer Kammer im Inneren des Gehäuses, wobei die Kammer eine Kammerwand aufweist, in der wenigstens zwei Öffnungen vorgesehen sind, ein Absperrelement, das im Inneren der Kammer drehbar gelagert ist und ausgelegt ist, wenigstens eine Öffnung der wenigstens zwei Öffnungen zumindest abschnittsweise zu verschließen, wobei das Absperrelement einen Absperrkörper und ein Absperrsegment mit einer Außenseite aufweist, die zur Kammerwand weist, wobei das Absperrsegment einen Absperrbereich und wenigstens ein Ansatzstück aufweist, wobei das Ansatzstück sich seitlich über den Absperrbereich hinaus erstreckt und wobei in dem Ansatzstück eine Aussparung vorgesehen ist.

Unter dem Absperrbereich des Absperrelements wird der Bereich verstanden, der ausgelegt ist, wenigstens eine Öffnung in der Kammerwand zur Regelung des Durchflusses bestimmungsgemäß zu verschließen, insbesondere vollständig zu verschließen.

Die Außenseite des Absperrsegments im Bereich des Absperrbereichs bildet die Absperrfläche, wobei die Kontur der Außenseite des Absperrsegments im Bereich des Absperrbereich vorzugsweise komplementär zu der Kammerwand geformt ist.

Das Ansatzstück erstreckt sich seitlich über den Absperrbereich hinaus, wobei hier seitlich so zu verstehen ist, dass sich das Ansatzstück in Drehrichtung oder entgegengesetzt zur Drehrichtung des Absperrelements erstreckt. Vorteilhafterweise ist das Ansatzstück parallel, insbesondere konzentrisch zur Kammerwand ausgerichtet.

Das Ansatzstück kann unter anderem dazu dienen, eine Öffnung im Zusammenhang mit der Einstellung eines bestimmten Mischungsverhältnisses teilweise zu verschließen. Die Hauptaufgabe des Ansatzstücks ist es jedoch wenigstens eine Öffnung der Kammerwand zu verengen, insbesondere den Durchmesser der Öffnung zur reduzieren, um den aufgrund der Öffnungen des Gehäuses vorgegebenen Kvs-Wert der Armatur zu verändern. Ihre Wirkung ist die einer Blende.

Der Absperrbereich ist somit ausgelegt, in der Armatur in einem gewünschten Betriebszustand eine der wenigstens zwei Öffnungen ganz oder teilweise zu verschließen, während das Ansatzstück den Durchmesser der anderen der wenigstens zwei Öffnungen reduziert. Das Ansatzstück und der Absperrbereich wirken in einer vorgegebenen Betriebsstellung somit auf zwei verschiedene Öffnungen.

Vorzugsweise sind die Größe des Absperrbereichs und die Größe des Ansatzstücks so gewählt, dass in wenigstens einem Betriebszustand eine der wenigstens zwei Öffnungen mittels des Absperrbereichs vollständig verschlossen ist und die zweite der wenigstens zwei Öffnung vollständig von dem Ansatzstück bedeckt ist, wobei die wenigstens zwei Öffnungen benachbart zueinander liegen.

Mithilfe des Ansatzstückes besteht daher die Möglichkeit den Kvs-Wert einer gegebenen Armatur zu ändern.

Vorzugsweise weisen die wenigstens zwei Öffnungen in der Kammerwand jeweils eine Öffnungsfläche und die Aussparung eine Aussparungsfläche auf, wobei wenigstens eine Öffnungsfläche größer als die Aussparungsfläche ist.

Liegt bei einer gegebenen Armatur das Ansatzstück an einer der wenigstens zwei Öffnungen in der Art einer Blende an, so wird der ursprüngliche Öffnungsquerschnitt der wenigstens einen Öffnung verringert, so dass hierdurch ein geringerer Kv-Wert für die gegebene Armatur eingestellt werden kann.

Die Öffnungsfläche der Öffnungen in der Kammerwand des Gehäuses gibt somit den maximal möglichen Kv-Wert für ein Gehäuse und somit für die Armatur an. Mittels des Ansatzstückes und insbesondere mittels der Größe und/oder der Form der Aussparung lässt sich der Kvs-Wert einer Armatur auf niedrigere Werte einstellen.

Dies führt dazu, dass bei allen oder mehreren Armaturen eines Armaturensatzes mit unterschiedlichen Kvs-Werten das gleiche Gehäuse verwendet werden kann. Insbesondere kann dadurch eine Gehäuseart mit einem gegebenen Öffnungsdurchmesser in Anwendungsbereichen mit unterschiedlichen Kvs-Werten eingesetzt werden, da nicht das Gehäuse verändert werden muss, sondern nur der Austausch des Absperrelements notwendig ist. Dies führt zu einer vereinfachten Produktion, da die Produktion auf ein oder wenige Gehäusearten unterschiedlicher Größe reduziert werden kann und nur noch unterschiedliche Absperrelemente bereitgestellt werden müssen.

Das beschriebene Absperrelement ist bei einer Vielzahl von Armaturen mit einem Einlass und einem Auslass einsetzbar. Insbesondere ist das beschriebene Absperrelement jedoch bei einem Verteiler oder einem Ventil, wie etwa einem Drei-Wege-Mischer und Vier-Wege-Mischer oder einem anderen Verteiler mit drei oder mehr Anschlüssen verwendbar.

Bei einer Ausführungsform kann die Aussparung ein Durchgang in dem Ansatzstück sein, beispielsweise in Form einer Bohrung durch das Ansatzstück. Alternativ kann das Ansatzstück eine freie Seite aufweisen und die Aussparung ist eine Vertiefung, die in die freie Seite mündet. Beispielsweise kann die Aussparung teilkreisförmig oder in Form von schmalen oder breiten Schlitzen bzw. Kerben ausgebildet sein. Die freie Seite kann die Seite sein, die entgegengesetzt zu dem Absperrbereich liegt.

Bei einer bevorzugten Ausführungsform weist das wenigstens eine Ansatzstück eine Außenfläche auf und der Absperrbereich eine Absperrfläche, wobei die Außenfläche flächenbündig mit der Absperrfläche ausgerichtet ist. Dies hat den Vorteil, dass beim Drehen des Absperrelements keine Toträume entstehen, in denen sich Fluid sammeln kann.

Üblicherweise ist die Absperrfläche komplementär zur Kontur der Kammerwand des Gehäuses ausgebildet, so dass die wenigstens eine Öffnung in dem Gehäuse möglichst dichtend verschlossen werden kann. Es ist weiter von Vorteil, dass das wenigstens eine Ansatzstück eine Außenfläche aufweist, deren Kontur komplementär zu der Kontur der Kammerwand des Gehäuses ausgebildet ist. Dies führt dazu, dass die Außenfläche analog wie die Absperrfläche entlang der Kammerwand des Gehäuses gleiten kann.

Bei einer bevorzugten Ausführungsform ist die Kammer im Querschnitt rund ausgebildet und das Absperrelement weist eine Absperrfläche mit einem kreisbogenförmigen Querschnitt auf. Beispielsweise ist die Kammer zylinderförmig ausgebildet, wobei sich die wenigstens zwei Öffnungen in der Mantelfläche der Kammerwand der Kammer befinden. Die Absperrfläche des Absperrbereich und vorzugsweise auch die Außenfläche des Ansatzstückes sind komplementär zu der zylinderförmig gebogenen Kammerwand der Kammer ausgebildet, wobei der Krümmungsradius der Absperrfläche und vorzugsweise auch der Außenfläche gleich oder geringfügig kleiner ist als der Radius der Kammer. Idealerweise ist für eine optimale Abdichtung wenigstens einer der wenigstens zwei Öffnungen in einem geschlossenen Zustand der Krümmungsradius der Absperrfläche gleich dem Radius der Kammer.

Bei dieser Ausführungsform ist es besonders von Vorteil, dass das Absperrelement die Grundform einer gebogenen Platte aufweist.

Bei einer ersten Ausführungsform sind der Absperrkörper und das Absperrsegment fest miteinander verbunden. Dies bedeutet, dass zur Einstellung des Kvs-Wertes in einer Armatur das Absperrelement komplett ausgetauscht wird.

Alternativ können der Absperrkörper und das Absperrsegment lösbar miteinander verbunden werden. Dies hat den Vorteil, dass nicht nur eine Gehäuseart mit einer vorgegebenen Größe bereitgehalten werden kann, sondern auch der Absperrkörper für Armaturen unterschiedlichen Kvs-Wertes gleich ausgebildet sein kann. Für Armaturen mit unterschiedlichen Kvs-Werten muss somit nur noch das Absperrsegment unterschiedlich gestaltet werden. Im Falle des Verschleißes der Absperrfläche muss bei dieser Ausführungsform nur das Absperrsegment ausgetauscht werden und nicht das komplette Absperrelement, was hinsichtlich des Materialverbrauchs von Vorteil ist.

Darüber hinaus bietet dies auch Vorteile bei der Lagerung und Logistik, da nur noch eine Vielzahl unterschiedlicher Absperrsegmente bereitgestellt werden müssen.

Bei Armaturen treten im Laufe des Betriebs häufig störende Ablagerungen auf, die im äußersten Fall zu einem Blockieren des Absperrelements führen können. Bei einer bevorzugten Ausführungsform ist das Absperrsegment beweglich mit dem Absperrkörper verbunden, so dass das Absperrsegment hierdurch gegebenenfalls einer Verunreinigung ausweichen kann.

Das Vorsehen eines gegenüber dem Absperrkörper beweglichen Absperrsegments hat den Vorteil, dass in dem Fall, in dem Verunreinigungen den Abstand zwischen Absperrelement und Kammerwand verkleinern, das Absperrsegment eine Relativbewegung durchführen kann, so dass eine Blockade zwischen Absperrelement und Kammerwand vermieden werden kann.

Prinzipiell kann die Relativbewegung des Absperrsegments bezüglich des Absperrkörpers parallel zur Kammerwand erfolgen. Es ist jedoch von Vorteil, dass die Bewegung des Absperrsegments in Bezug auf den Absperrkörper senkrecht zur Fläche der Kammerwand erfolgt, wodurch der Abstand zwischen Absperrelement und Kammerwand vergrößert werden kann, um beispielsweise einer Ablagerung aufgrund einer Verunreinigung auszuweichen.

Da das Absperrelement üblicherweise eine kreisförmige Drehbewegung durchführt, ist es somit von Vorteil, dass das Absperrsegment in radialer Richtung gegenüber dem Absperrkörper verlagerbar, insbesondere verschiebbar ist.

Zur Erhöhung der Dichtigkeit einer Armatur ist es bei dieser Ausführungsform von Vorteil, dass zwischen Absperrkörper und Absperrsegment wenigstens ein Rückstellelement, beispielsweise ein elastisches Element oder ein Federelement vorgesehen ist. Bei dem Federelement handelt es sich vorzugsweise um ein oder mehrere Druckfedern, insbesondere um Spiralfedern oder Wellenfedern, die im montierten Zustand das Absperrsegment gegen die Kammerwand der Kammer drücken. Weiterhin kann mittels des Rückstellelements das Spiel zwischen Kammerwand und Absperrfläche reduziert werden, wenn an der Absperrfläche beispielsweise Abriebserscheinungen vorhanden sind. Das elastische Element kann ein Bauteil sein, das aus einem Elastomer hergestellt ist, wie etwa ein Gummipuffer.

Bei einer bevorzugten Ausführungsform sind ein erstes Ansatzstück und ein zweites Ansatzstück vorgesehen, wobei das erste Ansatzstück an der ersten Seite des Absperrbereichs sich seitlich über die Absperrfläche hinaus erstreckt und das zweite Ansatzstück an einer der ersten Seite entgegengesetzt liegenden zweiten Seite des Absperrbereichs sich über den Absperrbereich hinaus erstreckt. Diese Ausführungsform ist besonders bei Armaturen von Vorteil, die drei oder mehr Öffnungen aufweisen, wobei zumindest zwei Öffnungen als Einlässe ausgebildet sind und benachbart zueinander angeordnet sind, wie etwa bei einem Drei-Wege-Mischer.

Bei dieser Art von Armaturen kann das Absperrelement sowohl im Uhrzeigersinn als auch gegen den Uhrzeigersinn gedreht werden, so dass der Absperrbereich des Absperrelements abwechselnd zwei benachbart angeordnete Öffnungen vollständig bedecken kann. Um sicher zu stellen, dass die dann jeweils geöffnete Öffnung von einem Ansatzstück bedeckt wird, um den maximalen Durchfluss durch die Öffnung zu reduzieren, sind beidseitig des Absperrelements entsprechende Ansatzstücke vorgesehen. Hierbei sind das erste Ansatzstück und das zweite Ansatzstück vorzugsweise spiegelbildlich zueinander ausgebildet. Es besteht jedoch auch die Möglichkeit, das erste Ansatzstück und das zweite Ansatzstück unterschiedlich auszubilden.

Um Toträume im Inneren der Kammer zu vermeiden, weist das Absperrelement Anströmflächen auf, die sich vorzugsweise in radialer Richtung erstrecken. Beispielsweise bilden die Anströmfläche und die Absperrfläche im Querschnitt einen Kreissektor.

Gegenstand der vorliegenden Erfindung ist ebenfalls ein Armaturensatz umfassend wenigstens zwei Armaturen nach einem der vorhergehenden Ansprüche, wobei das Gehäuse und der Absperrkörper jeder der wenigstens zwei Armaturen baugleich sind und das Absperrsegment, insbesondere das Ansatzstück unterschiedlich ausgebildet ist.

Vorzugsweise ist jedem Ansatzstück ein Kvs-Wert zugeordnet. Die Einstellung der Kvs-Werte wird dadurch erzielt, dass sich die Form und Größe der Aussparungen in den wenigstens zwei Ansatzstücken unterscheiden.

Baugleich heißt hier auch, dass das Gehäuse und der Absperrkörper die gleichen Maße aufweisen. Das Absperrsegment kann hierbei fest oder lösbar mit dem Absperrkörper verbunden sein, so dass je nach einer der beiden Ausführungsformen die Absperrelemente selbst oder nur die Absperrsegmente austauschbar sind. Es versteht sich, dass es auch Mischformen geben kann.

Bevorzugte Ausführungsformen werden anhand der beigefügten Zeichnungen näher erläutert, in denen zeigen:
- Fig. 1: einen Drei-Wege-Mischer in einer perspektivischen Ansicht von außen,
- Fig. 2: das Gehäuse eines Drei-Wege-Mischers in einer perspektivischen Ansicht,
- Fig. 3: einen Querschnitt durch den in den Figuren 1 und 2 dargestellten Drei-Wege-Mischer,
- Fig. 4: eine erste perspektivische Ansicht eines Absperrelements gemäß einer ersten Ausführungsform,
- Fig. 5: eine Seitenansicht des Absperrelements der Fig. 4,
- Fig. 6: eine weitere Ansicht des in Fig. 4 dargestellten Absperrelements,
- Fig. 7: eine zweite Ausführungsform eines Absperrelements in perspektivischer Ansicht,
- Fig. 8: eine Seitenansicht des in Fig. 7 dargestellten Absperrelements,
- Fig. 9: eine zweite Ansicht des in Fig. 7 dargestellten Absperrelements,
- Fig. 10: einen Drei-Wege-Mischer mit einem in den Figuren 4 bis 6 dargestellten Absperrelement in zerlegter Darstellung,
- Fig. 11: einen Drei-Wege-Mischer mit dem in den Figuren 7 bis 9 dargestellten Absperrelement in teilweise zerlegter Darstellung,
- Fig. 12: das in den Figuren 4 bis 6 dargestellte Absperrelement in zerlegter Darstellung in perspektivischer Ansicht,
- Fig. 13: das in den Figuren 4 bis 6 dargestellte Absperrelement in zerlegter Darstellung in einer Draufsicht,
- Fig. 14: das Absperrsegment in einer Ansicht von hinten,
- Fig. 15: die wesentlichen Bestandteile eines Armaturensatzes,
- Fig. 16: den in Fig. 15 gezeigten Armaturensatz mit weiteren Bestandteilen,
- Fig. 17: einen Querschnitt durch den in Fig. 1 dargestellten Drei-Wegemischer in einer ersten Betriebsstellung,
- Fig. 18: einen Querschnitt durch den in Fig. 1 dargestellten Drei-Wegemischer in einer zweiten Betriebsstellung,
- Fig. 19: eine dritte Ausführungsform eines Absperrelements in zerlegter Darstellung in einer Ansicht von vorne und
- Fig. 20: die in Fig. 19 dargestellte Ausführungsform eines Absperrelement in zerlegter Darstellung in einer Ansicht von hinten.

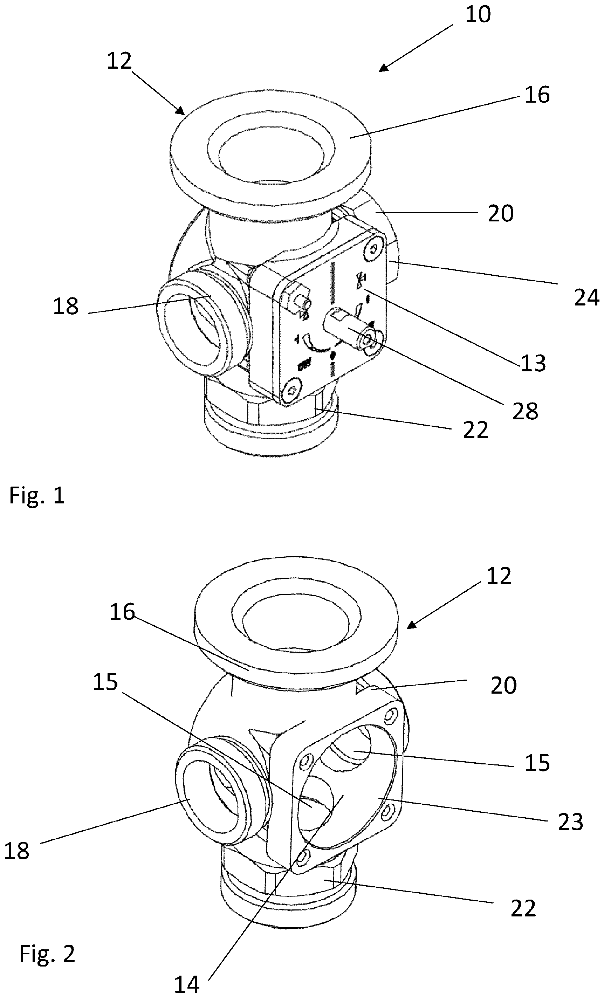

In Figur 1 ist eine Armatur in Form eines Drei-Wege-Mischers 10 in einer perspektivischen Ansicht von außen gezeigt.

Der Drei-Wege-Mischer 10 umfasst ein Gehäuse 12, ein Aufnahmeelement 13, auf welches eine Verstellvorrichtung mit einem Motor oder mit einem mechanischen Hebel montiert werden kann, und ein im Inneren des Gehäuse 12 befindliches Absperrelement, welches weiter unten im Detail beschrieben wird.

Das Gehäuse 12 des in Fig. 1 dargestellten Drei-Wege-Mischer 10 ohne Aufnahmeelement 13 und ohne Absperrelement ist in Fig. 2 gezeigt.

Wie insbesondere Figur 2 zeigt, besitzt das Gehäuse 12 im Inneren eine zylindrische Kammer, die als Mischkammer 14 dient. Entlang des Umfangs der Mischkammer 14 befinden sich jeweils im Abstand von 90° vier Öffnungen 15, in die Anschlüsse 16, 18, 20, 22 münden. Von den vier Öffnungen 15 sind in Fig. 2 nur zwei deutlich zu erkennen.

Das Gehäuse 12 eignet sich für die Verwendung als Drei-Wege-Mischer oder auch als Verteiler mit vier Anschlüssen. Die einzelnen Anschlüsse 16, 18, 20, 22 können daher je nach Bedarf als Einlass oder Auslass verwendet werden. Falls nicht benötigt, können einzelne Anschlüsse 16, 18, 20, 22 auch verschlossen werden. Dies ist insbesondere bei der Verwendung des Gehäuses 12 für einen Drei-Wege-Mischer gegeben. Die entgegengesetzt voneinander liegenden Anschlüsse 18 und 20 des Gehäuses 12 sind im Übrigen baugleich, so dass das Gehäuse 12 für einen linksseitigen und einen rechtsseitigen Drei-Wege-Mischer eingesetzt werden kann, indem je nach Anforderung einer der beiden entgegengesetzt liegenden Anschlüsse 18, 20 verschlossen wird.

Wenn auch nicht zu erkennen, so ist die Mischkammer 14 an ihrer Unterseite verschlossen. An der Oberseite befindet sich eine weitere Öffnung 23, die mittels des Aufnahmeelements 13 verschließbar ist.

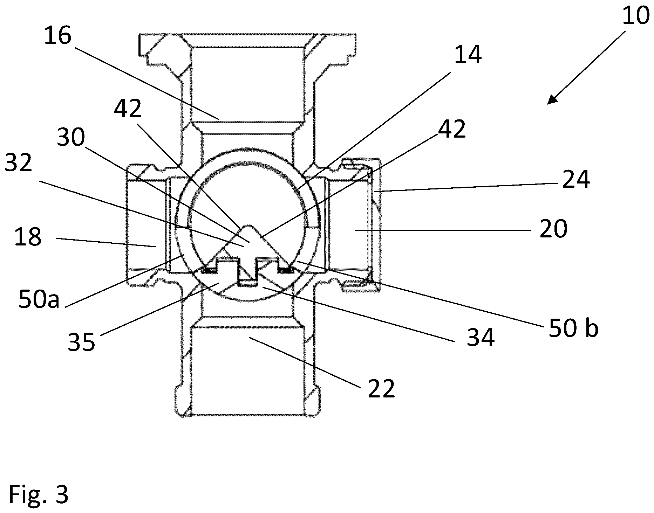

In Fig. 3 ist der Drei-Wege-Mischer 10 der Figuren 1 und 2 im Querschnitt dargestellt. Bei dieser Ausführungsform dienen die Rohrleitungsanschlüsse 18, 22 als Einlass für ein Fluid wie etwa Wasser, der Rohrleitungsanschluss 16 als Auslass. Der Rohrleitungsanschluss 20 ist mittels einer Abdeckkappe 24 verschlossen.

Im Inneren der Mischkammer 14 befindet sich ein Absperrelement 30. Das Absperrelement 30 weist allgemein einen Absperrkörper 32 und ein Absperrsegment 34 auf. Das Absperrsegment 34 ist in einen Absperrbereich 35 mit einer nach außen weisenden Absperrfläche und in zwei Ansatzstücke 50a, 50b mit jeweils einer Außenfläche unterteilt. Die beiden Ansatzstücke 50a, 50b sind jeweils beidseitig des Absperrbereichs 35 vorgesehen. Mittels der Absperrfläche ist es möglich, eine der als Einlass dienenden Öffnungen an den Rohrleitungsanschlüssen 18, 22 ganz zu bedecken, so dass die Rohrleitungsanschlüsse 18, 22 wechselweise vollkommen verschlossen sind. Die beiden Ansatzstücke 50a, 50b dienen zur Verringerung des Durchmessers der Öffnungen 15.

Die Größe des Absperrbereichs 35 und die Größe der Ansatzstücke 50a, 50b sind so gewählt, dass in wenigstens einem Betriebszustand eine der Öffnungen 15 mittels des Absperrbereichs 35 vollständig verschlossen ist und eine benachbarte Öffnung 15 vollständig von einem Ansatzstück 50a, 50b bedeckt ist.

Um wechselweise beide Rohrleitungsanschlüsse 18, 22 zu verschließen, ist das Absperrelement 30 drehbar um die Längsachse der zylindrischen Mischkammer 14 gelagert.

Der Absperrkörper 32 verfügt über zwei unter einem Winkel angeordnete Anströmflächen 42, wobei sich die beiden Anströmflächen 42 jeweils radial nach außen erstrecken. Der Winkel zwischen den beiden Anströmflächen 42 beträgt etwa 90°. Die Absperrfläche und die beiden Anströmflächen 42 bilden im Querschnitt einen Kreissektor.

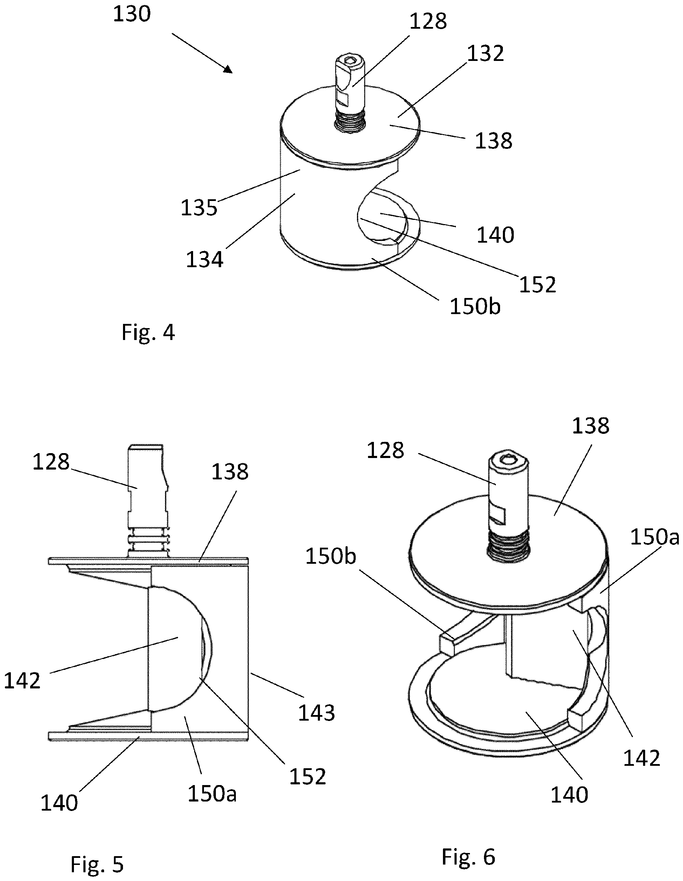

Die Figuren 4 bis 6 zeigen eine erste Ausführungsform eines Absperrelements 130. Das Absperrelement 130 umfasst einen Absperrkörper 132 und ein Absperrsegment 134 mit einem Absperrbereich 135. Der Absperrkörper 132 umfasst wiederum eine obere Abdeckscheibe 138 und eine untere Abdeckscheibe 140. Die obere Abdeckscheibe 138 und die untere Abdeckscheibe 140 sind parallel zueinander ausgerichtet und im Abstand voneinander angeordnet. Sie weisen beide den gleichen Radius auf. An der oberen Abdeckscheibe 138 ist ein Stift 128 senkrecht zur oberen Abdeckscheibe 138 befestigt und bildet eine Verlängerung der Drehachse des Absperrelements 130.

Wie in den Figuren 5 und 6 zu erkennen ist, befinden sich zwischen der oberen Abdeckscheibe 138 und der unteren Abdeckscheibe 140 die Anströmflächen 142, die senkrecht zu der oberen Abdeckscheibe 138 und der unteren Abdeckscheibe 140 ausgerichtet sind. Insbesondere bestehen die Anströmflächen 142 aus zwei Platten, die sich ausgehend von der Drehachse radial nach außen erstrecken und zwischen sich einen Winkel ausbilden.

Das Absperrsegment 134 ist als gebogenes halbkreisförmiges Plattenelement ausgebildet, wobei der Radius des Absperrsegments 134 an den Radius der oberen Abdeckscheibe 138 und der unteren Abdeckscheibe 140 angepasst ist, so dass die Außenseite 144 des Absperrsegments 134 flächenbündig zum Rand der oberen Abdeckscheibe 138 und der unteren Abdeckscheibe 140 ist.

Das Absperrsegment 134 umfasst den Absperrbereich 135 mit einer Absperrfläche sowie zwei Ansatzstücke 150a, 150b mit jeweils einer Außenfläche. Die beiden Ansatzstücke 150a, 150b sind in Umfangsrichtung des Absperrsegments 134 beidseitig des Absperrbereichs 135 angeordnet. In Umfangsrichtung weisen die beiden Ansatzstücke 150a, 150b zusammen in etwa die gleiche Länge auf wie der Absperrbereich 135, wobei die Absperrfläche und die Außenfläche flächenbündig ineinander übergehen. Der Absperrbereich 135 deckt etwa einen Winkelbereich von 90° ab, kann sich aber auch über einen etwas größeren oder kleineren Bereich erstrecken, wie etwa 80° bis 100°.

Jedes Ansatzstück 150a, 150b weist eine freie Seite auf, in der eine kreisbogenförmige Aussparung 152 vorgesehen ist. Die Aussparung 152 weist einen kleineren Radius auf als die Öffnung 15 in dem Gehäuse 12, sodass die Aussparung 152 die Öffnung 15 des Gehäuses 12 teilweise verschließt. Hierdurch kann der Kv-Wert des Drei-Wege-Mischers 10 reduziert werden.

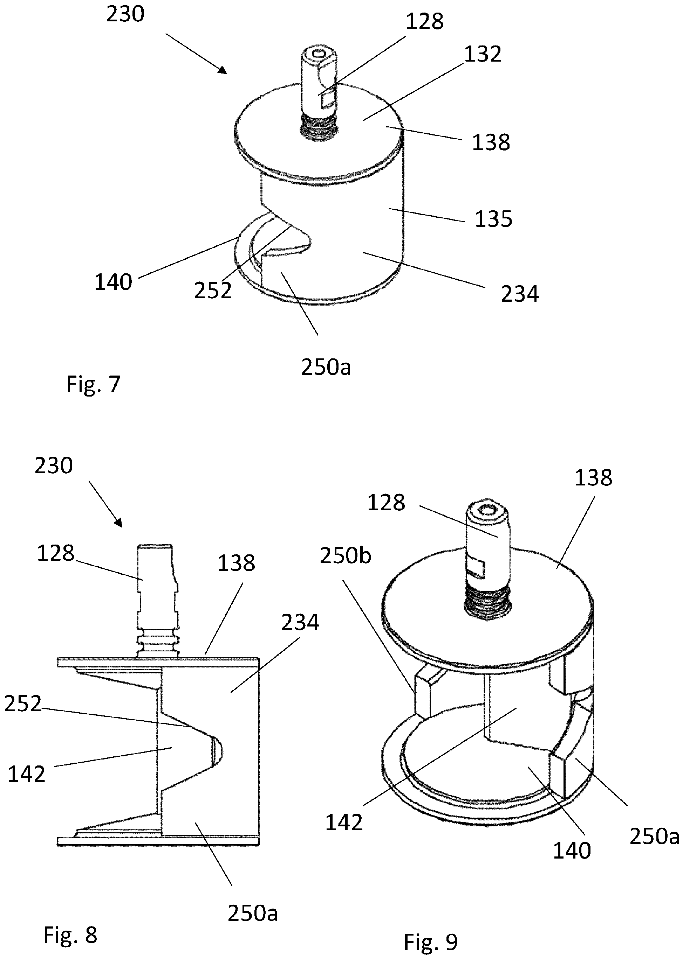

In den Figuren 7 bis 9 ist eine weitere Ausführungsform eines Absperrelements 230 gezeigt. Das in den Figuren 7 bis 9 dargestellte Absperrelement 230 unterscheidet sich von dem in den Figuren 4 bis 6 dargestellten Absperrelement 130 dadurch, dass das Absperrsegment 234 der in den Figuren 7 bis 9 dargestellten Ausführungsform in den beiden Ansatzstücken 250a, 250b eine Aussparung 252 aufweist, die sich in der Form und Größe von der Aussparung 152 des Absperrsegments 134 der in den Figuren 4 bis 6 dargestellten Ausführungsform unterscheidet. Insbesondere weist die Aussparung 252 des Absperrsegments 234 der Figuren 7 bis 9 eine kleinere Fläche auf als die Aussparung 152 des Absperrsegments 134 der in den Figuren 4 bis 6 dargestellten Ausführungsform. Anstelle der kreisbogenförmigen Aussparung 152 in den Figuren 4 bis 6 ist eine V-förmige Aussparung 252 vorgesehen.

Der Absperrbereich 135 ist bei beiden Ausführungsformen baugleich, auch weisen die Ansatzstücke 250a, 250b bis auf die Form der Aussparung 252 die gleiche Grundform auf wie die Ansatzstücke 152 der in den Figuren 4 bis 6 dargestellten Ausführungsform auf. Die Grundform des Absperrsegments 234 ist ebenfalls bogenförmig und das Absperrsegment 234 ist auch als gebogenes halbkreisförmiges Plattenelement ausgebildet, wobei der Radius des Absperrsegments 134 an den Radius der oberen Abdeckscheibe 138 und der unteren Abdeckscheibe 140 angepasst ist, so dass die Außenseite 144 des Absperrsegments 134 flächenbündig zum Rand der oberen Abdeckscheibe 138 und der unteren Abdeckscheibe 140 ist. Die Außenfläche der Ansatzstücke 250a, 250b ist flächenbündig zur Absperrfläche des Absperrbereichs 135.

Die übrigen Bauteile der in den Figuren 7 bis 9 dargestellten Ausführungsform entsprechen denen der in den Figuren 4 bis 6 dargestellten Ausführungsform.

Mit dieser in den Figuren 7 bis 9 dargestellten Ausführungsform kann der Kvs-Wert der Armatur, insbesondere des Drei-Wege-Mischers noch weiter reduziert werden. Während beispielsweise mittels der in den Figuren 4 bis 6 dargestellten Ausführungsform eines Absperrelements ein hoher Kvs-Wert, beispielsweise ein Kvs-Wert von 40 m³/h erreicht werden kann, kann mit der in den Figuren 7 bis 9 dargestellten Ausführungsform eines Absperrelements ein niedriger Kvs-Wert, beispielsweise ein Kvs-Wert von 25 m³/h erreicht werden.

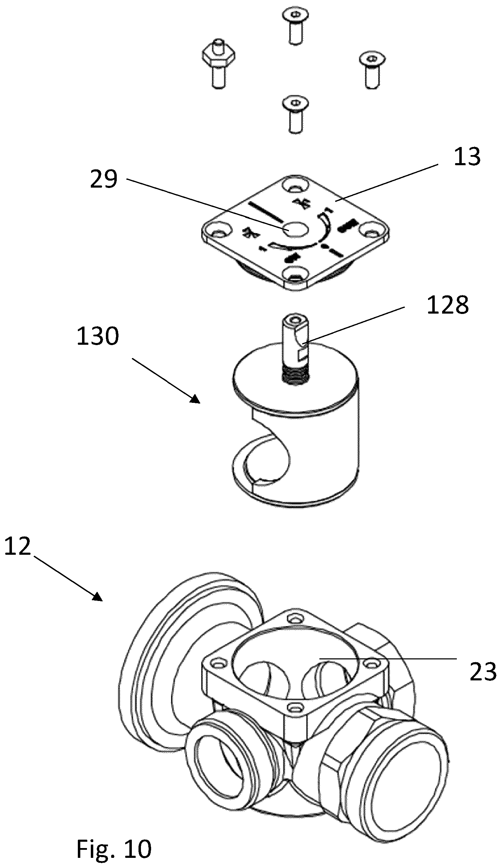

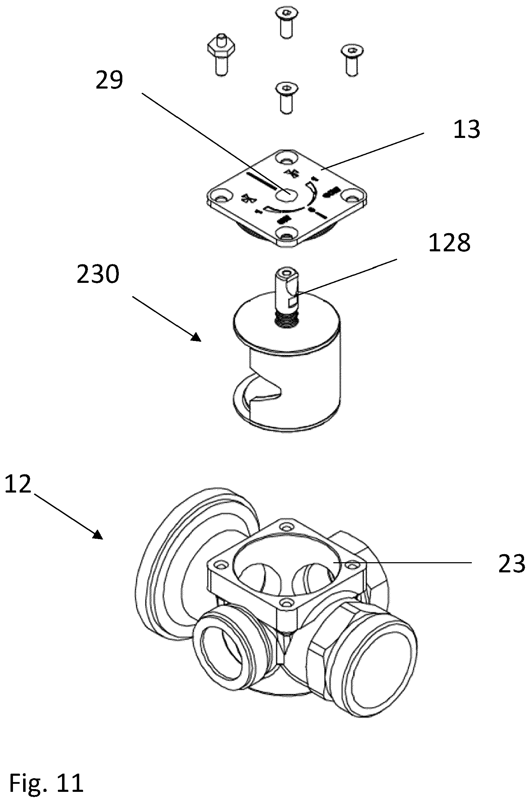

In Figur 10 ist die Montage des in den Figuren 4 bis 6 dargestellten Absperrelements 130 in ein Gehäuse 12 gezeigt. Die Figur 11 zeigt die Montage des in den Figuren 7 bis 9 dargestellten Absperrelements 230.

In beiden Fällen wird das Absperrelement 130, 230 durch die Öffnung 23 in die Mischkammer 14 des Gehäuses 12 eingesetzt, so dass der Stift 28 aus der Öffnung 23 hinausragt. Der Außenradius des Absperrelements 130, 230 ist an den Innenradius der Mischkammer 14 angepasst, so dass das Absperrelement 130, 230 und die Kammerwand der Mischkammer 14 dichtend anliegen. Der Außenradius des Absperrelements 130, 230 ist somit gleich dem Innenradius der Mischkammer 14. Die Drehachse des Absperrelements 130, 230 ist gleich der Längsachse der Mischkammer 14.

Die Öffnung 23 wird mittels des Aufnahmeelements 13 fest verschlossen, wobei der Stift 28 durch eine Bohrung 29 in dem Aufnahmeelement 13 aus dem Gehäuse 12 herausragt. Der Stift 28 kann entweder manuell mittels eines Hebels oder elektrisch mittels eines Motors gedreht werden, so dass das Absperrelement 130 in der Mischkammer 14 gedreht werden kann. Die Drehung des Absperrelements 130 kann sowohl im Uhrzeigersinn als auch gegen den Uhrzeigersinn erfolgen, so dass das Absperrelement 130 verschiedene Betriebspositionen einnehmen kann.

Da sich die beiden Absperrelemente 130 und 230 nur in der Ausbildung des Ansatzstückes 150, 250, insbesondere der Aussparungen 152, 252 unterscheiden, können diese in dem Gehäuse 12 gegeneinander ausgetauscht werden können.

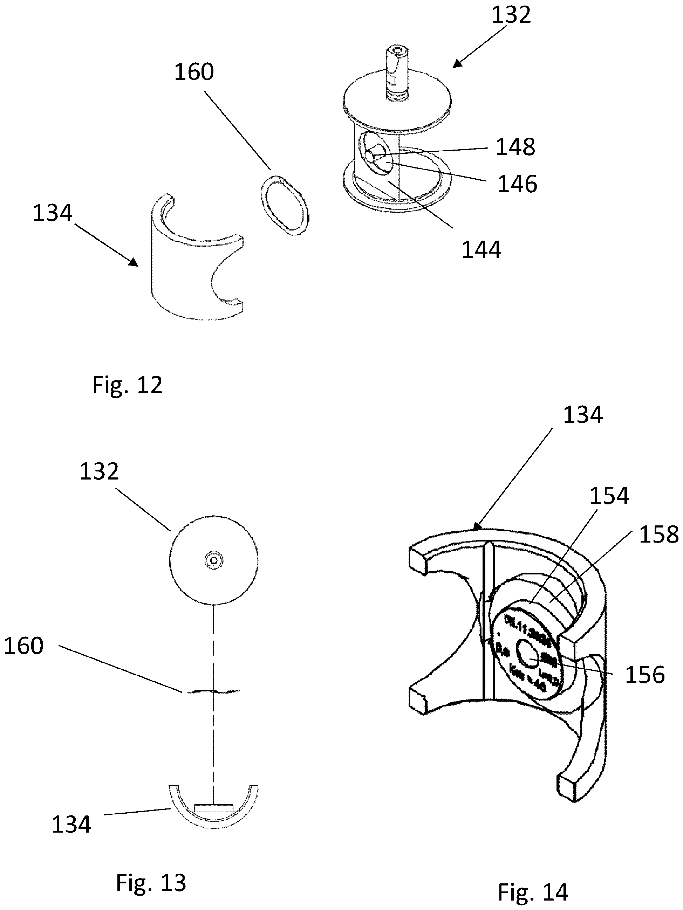

Die Figuren 12 und 13 zeigen das Absperrelement 130 in einer zerlegten Darstellung. In Figur 12 sind die Bestandteile des Absperrelements 130 in einer perspektivischen Ansicht gezeigt und in Fig. 13 ist das Absperrelement in einer Ansicht von oben zu erkennen.

Der Absperrkörper 132 und das Absperrsegment 134 sind als getrennte Bauteile ausgebildet, wobei zwischen Absperrkörper 132 und Absperrsegment 134 ein Rückstellelement in Form einer kreisförmigen Wellenfeder 160 vorgesehen ist. Bei der Wellenfeder 160 handelt es sich um eine Druckfeder.

An dem Absperrkörper 132 ist zwischen den beiden Anströmflächen 142 eine Wand 144 vorgesehen, so dass die Anströmflächen 142 und die Wand im Querschnitt ein Dreieck bilden, wobei insbesondere ein Dreieck mit zwei gleich langen Seiten, die von den Anströmflächen 142 gebildet werden, entsteht. In der Wand 144 befindet sich eine kreisförmige Vertiefung 146, in der wiederum ein Pin 148 vorgesehen ist, der aus der Vertiefung 146 herausragt und in radialer Richtung des Absperrkörpers 132 weist.

Auf der der Absperrfläche entgegengesetzt liegenden Innenseite des Absperrsegments 134 ist komplementär zu der Vertiefung 146 und dem Pin 148 des Absperrkörpers 132 eine kreisförmige Erhebung 154 mit einer Bohrung 156 im Zentrum der Erhebung 154 vorgesehen. Weiterhin befindet sich um die kreisförmige Erhebung 154 eine kreisförmige Anschlagfläche 158. Die kreisförmige Erhebung zusammen mit der Bohrung 156 wechselwirken mit der Vertiefung 146 und dem Pin 148 des Absperrkörpers 132, so dass zwischen dem Absperrkörper 132 und Absperrsegment 134 im montierten Zustand eine Steckverbindung ausgebildet ist. Das Absperrsegment 134 ist dadurch in radialer Richtung gegenüber dem Absperrkörper 132 beweglich, insbesondere verschiebbar. Zwischen der Anschlagfläche 158 und der Wand 144 befindet sich die Wellenfeder 160, deren Durchmesser an den Durchmesser der Anschlagfläche 158 angepasst ist. Der Durchmesser der Anschlagfläche 158 und somit der Wellenfeder 160 ist möglichst groß gewählt, so dass die Wellenfeder durchgehend am Rand der Absperrfläche angreift.

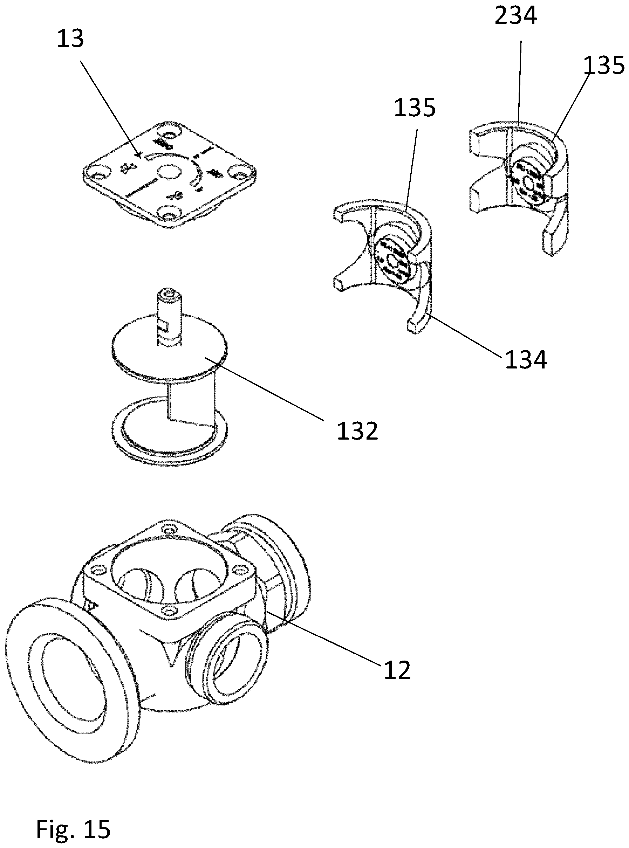

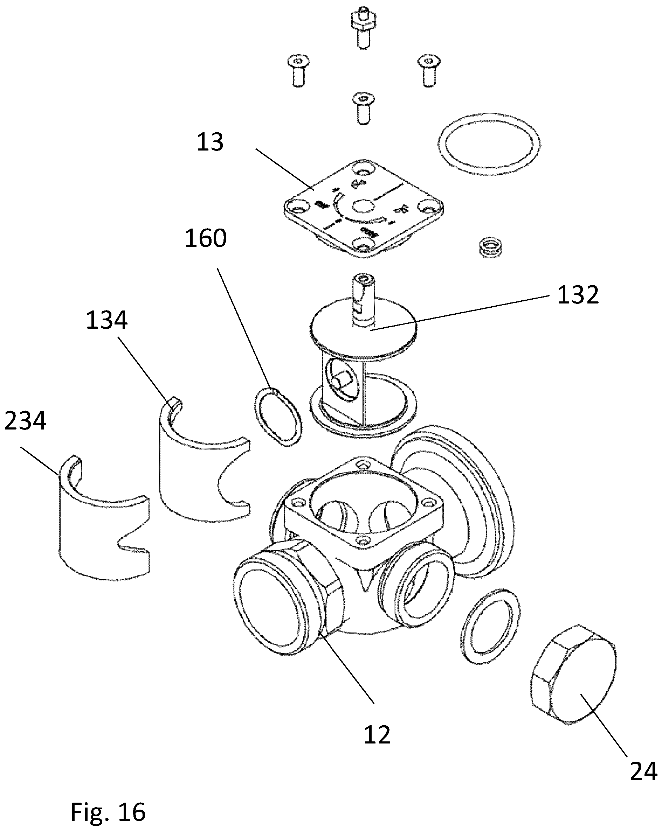

In den Figuren 15 und 16 sind die Bauteile eines Armaturensatzes mit zwei verschiedenen Kvs-Werten gezeigt.

Der Armaturensatz umfasst ein Gehäuse 12, einen Absperrkörper 132, zwei verschiedene Absperrsegmente 134, 234 sowie ein Aufnahmeelement 13.

Wie insbesondere die Figuren 15 und 16 zeigen, sind die Innenseiten der Absperrsegmente 134 und 234 im Bereich der Absperrfläche gleich ausgebildet, so dass beide Absperrsegmente 134 und 234 mit der Vertiefung 146 und dem Pin 148 des Absperrkörpers 132 zur Ausbildung einer Steckverbindung wechselwirken können. Die Absperrsegmente 134 und 234 können somit unter Beibehaltung des Absperrkörpers 132 ausgetauscht werden.

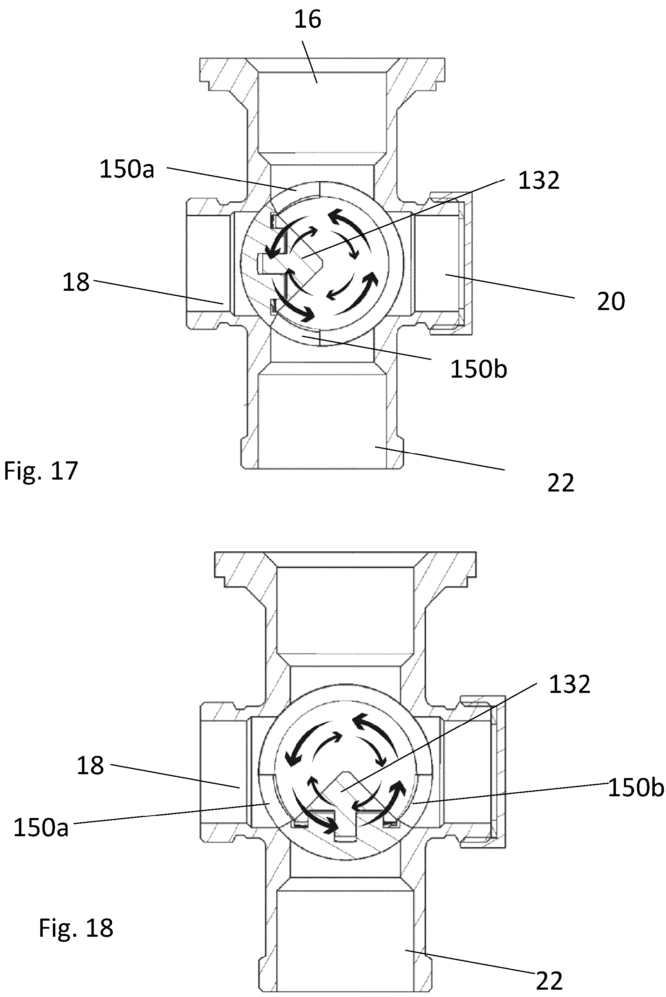

In den Figuren 17 und 18 sind zwei verschiedene Betriebszustände gezeigt. Bei dem in Figur 17 dargestellten Betriebszustand ist die Öffnung am Anschluss 22 verschlossen und bei dem in Figur 18 dargestellten Betriebszustand ist die Öffnung am Anschluss 18 verschlossen. Eines der beiden Ansatzstücke 150a, 150b ragt hierbei in den jeweils geöffneten Anschluss und verringert dadurch den Durchmesser der Öffnung 15. So ragt das erste Ansatzstück 150a in den Anschluss 18, wenn der Anschluss 22 verschlossen ist. Das zweite Ansatzstück 150b ragt in den Anschluss 22, wenn der Anschluss 18 verschlossen ist. Hierdurch kann die Durchflussrate und somit der Kv-Wert des Drei-Wege-Mischers verändert werden.

Das Absperrelement 132 kann sowohl in Uhrzeigerrichtung als auch gegen die Uhrzeigerrichtung gedreht werden, um von einem Betriebszustand in den anderen zu gelangen.

In jeder Betriebsstellung drückt die Wellenfeder 160 das Absperrsegment 134 gegen die Kammerwand des Gehäuses 12, so dass die Absperrfläche des Absperrsegments 134 immer möglichst eng an der Kammerwand des Gehäuses 12 anliegt.

Befinden sich beispielsweise Verunreinigungen an der Kammerwand des Gehäuses 12, so wird bei einer Drehbewegung das Absperrsegment 134 gegen den Absperrkörper 132 gedrückt. Das Absperrelement 130 kann die Stelle mit der Verunreinigung an der Kammerwand des Gehäuses 12 passieren. Nachdem das Absperrelement 130 die Stelle mit der Verunreinigung passiert hat, drückt die Wellenfeder 160 das Absperrsegment 134 radial nach außen in Richtung Kammerwand des Gehäuses 12, so dass das Absperrsegment 134 wieder möglichst nahe an der Kammerwand des Gehäuses 12 anliegt.

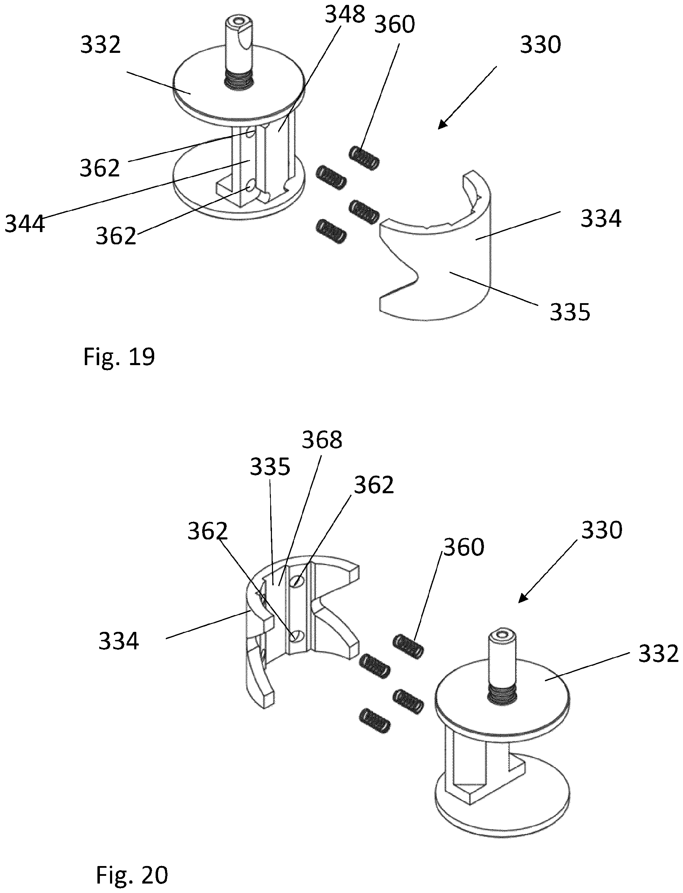

In den Figuren 19 und 20 ist eine alternative Ausführungsform eines Absperrelements 330 gezeigt, bei der das Absperrsegment 334 lösbar mit dem Absperrkörper 332 verbunden ist. In den Figuren 19 und 20 ist eine alternative Ausführungsform eines Absperrelements 330 gezeigt, bei der das Absperrsegment 334 lösbar mit dem Absperrkörper 332 verbunden ist. Bei dieser Ausführungsform sind als Rückstellelement vier Spiralfedern 360 vorgesehen. Hierfür sind sowohl auf der Innenseite des Absperrsegments 334 im Absperrbereich 335 der Absperrfläche als auch auf der Wand des Absperrkörpers 332 Bohrungen 362 vorgesehen, die die Druckfedern 360 jeweils aufnehmen. Die Bohrungen 362 befinden sich im Bereich der Ecken der Wand 344 bzw. des Absperrbereichs 335, um das Absperrsegment 334 möglichst gleichmäßig an die Kammerwand der Mischkammer anzudrücken.

Zur Ausbildung einer Verbindung zwischen dem Absperrsegment 334 und dem Absperrkörper 332 ist auf der Innenseite des Absperrsegments 334 im Absperrbereich 335 eine nutartige Vertiefung 368 und komplementär zu der nutartigen Vertiefung 368 auf der Wand 344 eine leistenförmige Erhöhung 348 vorgesehen. Sowohl die nutartige Vertiefung 368 als auch die Erhöhung 348 erstrecken sich parallel zur Drehachse des Absperrelements 330.

Wenn auch nicht explizit dargestellt, so kann das Absperrsegment im Rahmen der Erfindung auch fest mit dem Absperrkörper verbunden sein und insbesondere als ein nicht zerlegbares Bauteil ausgebildet sein. In diesem Fall wird bei einem Armaturenset das gesamte Absperrelement und nicht nur das Absperrsegment als variables Bauteil bereitgehalten, während die übrigen Bauteile zur Ausbildung eines Armaturensets für alle Armaturen des Armaturensets gleich sind.

Das Vorsehen eines Rückstellelements beispielsweise in Form eines Federelement zwischen Absperrsegment und Absperrkörper ist für die Einstellung des Kvs-Wertes einer Armatur mit Hilfe der beschriebenen Absperrelemente nicht zwingend notwendig.

Bei der dargestellten Armatur handelt es sich um einen Drei-Wege-Mischer. Bei einer nicht dargestellte Ausführungsform ist die Armatur ein Vier-Wege-Mischer. Insbesondere kann die in den Figuren dargestellte Armatur auch als Vier-Wege-Mischer verwendet werden. Bei dieser Ausführungsform wird der Deckel 24 weggelassen und der Anschluss 20 mit einem Rohrleitungselement verbunden.

Anstelle eines Gehäuses mit vier Öffnungen kann das Gehäuse mehr oder weniger Öffnungen umfassen. Beispielweise kann das Gehäuse nur drei Öffnungen aufweisen.

Die dargestellten Aussparungen in den Ansatzstücken sind beispielhaft. Es versteht sich, dass zur Einstellung eines gewünschten Kvs-Wertes einer Armatur die Form und Größe der Aussparung geändert werden kann. Auch die Anordnung der Aussparung auf dem Ansatzstück kann sich unterscheiden. Darüber hinaus kann die Aussparung auch als Bohrung ausgebildet sein.

Im Rahmen der Erfindungen sind auch nicht dargestellte Ausführungsformen umfasst, bei denen einzelne Merkmale weggelassen oder in anderer Weise kombiniert wurden.

## Patentansprüche

1. Armatur, umfassend
ein Gehäuse (12) mit einer Kammer (14) im Inneren des Gehäuses (12), wobei die Kammer (14) eine Kammerwand aufweist, in der wenigstens zwei Öffnungen (15) vorgesehen sind,
ein Absperrelement (30; 130; 230; 330), das im Inneren der Kammer (14) drehbar gelagert ist und ausgelegt ist, wenigstens eine Öffnung (15) der wenigstens zwei Öffnungen zumindest abschnittsweise zu verschließen, wobei das Absperrelement (30; 130; 230; 330) einen Absperrkörper (32; 132; 332) und ein Absperrsegment (34; 134; 234; 334) mit einer Außenseite aufweist, die zur Kammerwand weist, **dadurch gekennzeichnet, dass** das Absperrsegment (34; 134; 234; 334) einen Absperrbereich (35; 135) und wenigstens ein Ansatzstück (50a, 50b; 150a, 150b; 250a, 250b) aufweist, wobei das Ansatzstück (50a, 50b; 150a, 150b; 250a, 250b) sich seitlich über den Absperrbereich (35; 135) hinaus erstreckt und wobei in dem Ansatzstück (50a, 50b; 150a, 150b; 250a, 250b) eine Aussparung (52; 152; 252) vorgesehen ist.

2. Armatur nach Anspruch 1, **dadurch gekennzeichnet, dass** die wenigstens zwei Öffnungen (15) jeweils eine Öffnungsfläche und die Aussparung (52; 152; 252) eine Aussparungsfläche aufweisen, wobei wenigstens eine Öffnungsfläche größer ist als die Aussparungsfläche.

3. Armatur nach einem der vorhergehenden Ansprüche, **dadurch gekennzeichnet, dass** die Aussparung ein Durchgang in dem Ansatzstück ist.

4. Armatur nach einem der Ansprüche 1 oder 2, **dadurch gekennzeichnet, dass** das Ansatzstück (50a, 50b; 150a, 150b; 250a, 250b) eine freie Seite aufweist und die Aussparung (52; 152; 252) eine Vertiefung ist, die in die freie Seite mündet.

5. Armatur nach einem der vorhergehenden Ansprüche, **dadurch gekennzeichnet, dass** das wenigstens eine Ansatzstück (50a, 50b; 150a, 150b; 250a, 250b) eine Außenfläche aufweist und der Absperrbereich (35; 135) eine Absperrfläche, wobei die Außenfläche flächenbündig mit der Absperrfläche ausgerichtet ist.

6. Armatur nach einem der vorhergehenden Ansprüche, **dadurch gekennzeichnet, dass** das wenigstens eine Ansatzstück (50a, 50b; 150a, 150b; 250a, 250b) eine Außenfläche aufweist, deren Kontur komplementär zu der Kontur der Kammerwand des Gehäuses (12) ausgebildet ist.

7. Armatur nach einem der vorhergehenden Ansprüche, **dadurch gekennzeichnet, dass** die Kammer (14) im Querschnitt rund ausgebildet ist, insbesondere eine zylinderförmige Grundform aufweist und das Absperrsegment (34; 134; 234; 334) einen Absperrbereich (35; 135) mit einem kreisbogenförmigen Querschnitt aufweist.

8. Armatur nach einem der vorhergehenden Ansprüche, **dadurch gekennzeichnet, dass** das Absperrsegment (34; 134; 234; 334) die Grundform einer gebogenen Platte aufweist.

9. Armatur nach einem der vorhergehenden Ansprüche, **dadurch gekennzeichnet, dass** der Absperrkörper und das Absperrsegment fest miteinander verbunden sind.

10. Armatur nach einem der Ansprüche 1 bis 8, **dadurch gekennzeichnet, dass** der Absperrkörper (32; 132; 332) und das Absperrsegment (34; 134; 234; 334) lösbar miteinander verbunden sind.

11. Armatur nach einem der vorhergehenden Ansprüche, **dadurch gekennzeichnet, dass** das Absperrsegment (34; 134; 234; 334) beweglich mit dem Absperrkörper (32; 132; 332) verbunden ist.

12. Armatur nach Anspruch 12, **dadurch gekennzeichnet, dass** zwischen Absperrkörper (32; 132; 332) und Absperrsegment (34; 134; 234; 334) wenigstens ein Rückstellelement, insbesondere ein Federelement oder ein elastisches Bauteil aus einem Elastomer vorgesehen ist.

13. Armatur nach einem der vorhergehenden Ansprüche, **dadurch gekennzeichnet, dass** ein erstes Ansatzstück (50a; 150a; 250a) und ein zweites Ansatzstück (50b; 150b; 250b) vorgesehen sind, wobei das erste Ansatzstück (50a; 150a; 250a) an einer ersten Seite des Absperrbereiches (35; 135) sich seitlich über das Absperrbereich (35; 135) hinaus erstreckt und das zweite Ansatzstück (50b; 150b; 250b) an einer der ersten Seite entgegengesetzt liegenden zweiten Seite des Absperrbereichs (35; 135) sich über den Absperrbereich (35; 135) hinaus erstreckt.

14. Armatur nach einem der vorhergehenden Ansprüche, **dadurch gekennzeichnet, dass** das Absperrelement (34; 134; 234; 334) Anströmflächen (42; 142) aufweist, die sich vorzugsweise in radialer Richtung erstrecken.

15. Armaturensatz umfassend wenigstens zwei Armaturen nach einem der Ansprüche 1 bis 14, **dadurch gekennzeichnet, dass** das Gehäuse (12) und der Absperrkörper (32; 132; 332) jeder Armatur baugleich sind und das Absperrsegment (34; 134; 234; 334) unterschiedlich ausgebildet ist.

## Geänderte Patentansprüche

### Geänderte Patentansprüche gemäss Regel 137(2) EPÜ.

1. Armatur, umfassend
ein Gehäuse (12) mit einer Kammer (14) im Inneren des Gehäuses (12), wobei die Kammer (14) eine Kammerwand aufweist, in der wenigstens zwei Öffnungen (15) vorgesehen sind,
ein Absperrelement (30; 130; 230; 330), das im Inneren der Kammer (14) drehbar gelagert ist und ausgelegt ist, wenigstens eine Öffnung (15) der wenigstens zwei Öffnungen zumindest abschnittsweise zu verschließen, wobei das Absperrelement (30; 130; 230; 330) einen Absperrkörper (32; 132; 332) und ein Absperrsegment (34; 134; 234; 334) mit einer Außenseite aufweist, die zur Kammerwand weist, wobei das Absperrsegment (34; 134; 234; 334) einen Absperrbereich (35; 135) und wenigstens ein Ansatzstück (50a, 50b; 150a, 150b; 250a, 250b) aufweist, wobei das Ansatzstück (50a, 50b; 150a, 150b; 250a, 250b) sich seitlich über den Absperrbereich (35; 135) hinaus erstreckt und wobei in dem Ansatzstück (50a, 50b; 150a, 150b; 250a, 250b) eine Aussparung (52; 152; 252) vorgesehen ist, **dadurch gekennzeichnet, dass** in einem Betriebszustand der Absperrbereich (35;135) ausgelegt ist, eine der wenigstens zwei Öffnungen (15) ganz zu verschließen, während das Ansatzstück (50a, 50b; 150a, 150b; 250a, 250b) den Durchmesser der anderen der wenigstens zwei Öffnungen (15) reduziert.

2. Armatur nach Anspruch 1, **dadurch gekennzeichnet, dass** die wenigstens zwei Öffnungen (15) jeweils eine Öffnungsfläche und die Aussparung (52; 152; 252) eine Aussparungsfläche aufweisen, wobei wenigstens eine Öffnungsfläche größer ist als die Aussparungsfläche.

3. Armatur nach einem der vorhergehenden Ansprüche, **dadurch gekennzeichnet, dass** die Aussparung ein Durchgang in dem Ansatzstück ist.

4. Armatur nach einem der Ansprüche 1 oder 2, **dadurch gekennzeichnet, dass** das Ansatzstück (50a, 50b; 150a, 150b; 250a, 250b) eine freie Seite aufweist und die Aussparung (52; 152; 252) eine Vertiefung ist, die in die freie Seite mündet.

5. Armatur nach einem der vorhergehenden Ansprüche, **dadurch gekennzeichnet, dass** das wenigstens eine Ansatzstück (50a, 50b; 150a, 150b; 250a, 250b) eine Außenfläche aufweist und der Absperrbereich (35; 135) eine Absperrfläche, wobei die Außenfläche flächenbündig mit der Absperrfläche ausgerichtet ist.

6. Armatur nach einem der vorhergehenden Ansprüche, **dadurch gekennzeichnet, dass** das wenigstens eine Ansatzstück (50a, 50b; 150a, 150b; 250a, 250b) eine Außenfläche aufweist, deren Kontur komplementär zu der Kontur der Kammerwand des Gehäuses (12) ausgebildet ist.

7. Armatur nach einem der vorhergehenden Ansprüche, **dadurch gekennzeichnet, dass** die Kammer (14) im Querschnitt rund ausgebildet ist, insbesondere eine zylinderförmige Grundform aufweist und das Absperrsegment (34; 134; 234; 334) einen Absperrbereich (35; 135) mit einem kreisbogenförmigen Querschnitt aufweist.

8. Armatur nach einem der vorhergehenden Ansprüche, **dadurch gekennzeichnet, dass** das Absperrsegment (34; 134; 234; 334) die Grundform einer gebogenen Platte aufweist.

9. Armatur nach einem der vorhergehenden Ansprüche, **dadurch gekennzeichnet, dass** der Absperrkörper und das Absperrsegment fest miteinander verbunden sind.

10. Armatur nach einem der Ansprüche 1 bis 8, **dadurch gekennzeichnet, dass** der Absperrkörper (32; 132; 332) und das Absperrsegment (34; 134; 234; 334) lösbar miteinander verbunden sind.

11. Armatur nach einem der vorhergehenden Ansprüche, **dadurch gekennzeichnet, dass** das Absperrsegment (34; 134; 234; 334) beweglich mit dem Absperrkörper (32; 132; 332) verbunden ist.

12. Armatur nach Anspruch 11, **dadurch gekennzeichnet, dass** zwischen Absperrkörper (32; 132; 332) und Absperrsegment (34; 134; 234; 334) wenigstens ein Rückstellelement, insbesondere ein Federelement oder ein elastisches Bauteil aus einem Elastomer vorgesehen ist.

13. Armatur nach einem der vorhergehenden Ansprüche, **dadurch gekennzeichnet, dass** ein erstes Ansatzstück (50a; 150a; 250a) und ein zweites Ansatzstück (50b; 150b; 250b) vorgesehen sind, wobei das erste Ansatzstück (50a; 150a; 250a) an einer ersten Seite des Absperrbereiches (35; 135) sich seitlich über das Absperrbereich (35; 135) hinaus erstreckt und das zweite Ansatzstück (50b; 150b; 250b) an einer der ersten Seite entgegengesetzt liegenden zweiten Seite des Absperrbereichs (35; 135) sich über den Absperrbereich (35; 135) hinaus erstreckt.

14. Armatur nach einem der vorhergehenden Ansprüche, **dadurch gekennzeichnet, dass** das Absperrelement (34; 134; 234; 334) Anströmflächen (42; 142) aufweist, die sich vorzugsweise in radialer Richtung erstrecken.

15. Armaturensatz umfassend wenigstens zwei Armaturen nach einem der Ansprüche 1 bis 14, **dadurch gekennzeichnet, dass** das Gehäuse (12) und der Absperrkörper (32; 132; 332) jeder Armatur baugleich sind und das Absperrsegment (34; 134; 234; 334) unterschiedlich ausgebildet ist.
